# EUROPEAN PATENT APPLICATION

(11) **EP 4 764 176 A1**
(43) Date of publication of application: **24.06.2026**
(21) Application number: 24222267.7
(22) Date of filing: 20.12.2024
(51) Int. Cl.: F01N 5/02

(54) **INTERMEDIATE HEAT STORAGE**

(71) Applicant: WinGD Ltd., 8400 Winterthur (CH)
(72) Inventor: Kallieros, Anastasios, 8051 Zürich (CH)
(74) Representative: Hartig, Michael

(57) **Abstract**

An apparatus configured for intermediate heat energy storage from a large engine, the apparatus comprising: a container comprising a heat storage medium, wherein the heat storage medium is capable of reversibly absorbing, storing, and releasing heat energy from the large engine; means to transfer, at a first time, a first amount of heat energy from the large engine to the heat storage medium; and means to supply, at a second time, a second amount of heat energy from the heat storage medium for reuse, in particular in a carbon capture (OCC) device.

## Description

### Technical field

The present invention is related to the field of chemical absorption carbon capture systems. Specifically, it relates to an apparatus, a system, and a method for intermediate heat or solvent storage from exhaust gas of a large engine. Further, it relates to a propulsion system for a marine vessel comprising such a system.

### Background

Large engines, which can be configured as two-stroke or four-stroke engines, for example, as longitudinally scavenged two-stroke large engines or two-stroke cross-head engines, are often used as drive units for ships, particularly large ships and vessels for the transport of goods, or in stationary operations such as driving large generators for generating electrical energy. The engines usually run for considerable periods in continuous operation, which places high demands on operational safety and availability. As a consequence, particularly long maintenance intervals, low wear, and economical handling of the operating materials are central criteria for the operator. Large engines typically have cylinders with an inner diameter (bore) of at least 200 mm. Nowadays, large engines with a bore of up to 980 mm or even more are used. Within the framework of this application, the term "large engine" designates an internal combustion engine with a bore of the cylinder(s) that is at least 200 mm and preferably at least 300 mm. Engine speed is preferably below 800 RPM, especially for four-stroke engines, and more preferably below 200 RPM for two-stroke engines, which indicates the designation of low-speed engines.

Large engines are classically configured as large diesel engines, which are operated with heavy fuel oil. The engine can be a diesel or a gas engine, a dual-fuel or a multi-fuel engine. Under the aspects of economic and efficient operation, compliance with exhaust-gas limit values, sustainability, reduction of CO₂ emissions, and the availability of resources, alternatives to heavy fuel oil are now also being sought for large engines. In this respect, both liquid fuels, i.e., fuels that are introduced into the combustion chamber in the liquid state, and gaseous fuels, i.e., fuels that are introduced into the combustion chamber in the gaseous state, are used.

Examples of liquid fuels as known alternatives to heavy fuel oil are other heavy hydrocarbons, which are particularly left over as residues from oil refining; alcohols, in particular methanol or ethanol; ammonia; gasoline; diesel; or also emulsions or suspensions such as slurries. Biological fuels, such as oil made from algae or seaweed, HVO (hydro-treated vegetable oil), and FAME (fatty acid methyl ester) based fuels are also possible. For example, it is known to use emulsions known as MSAR (Multiphase Superfine Atomized Residue) as fuel. As gaseous fuels, natural gases such as LNG (liquefied natural gas), liquefied gases such as LPG (liquefied petroleum gas), natural gas (NG), petrol gas (PG), ethane, or hydrogen are known. Further possible fuels comprise LBG (liquefied biogas), hydrogen, ammonia, and synthetic fuels from CO₂ (e.g., made by Power-To-Gas or Power-To-Liquid processes).

In particular, large engines are also known which can be operated with at least two or even more different fuels, whereby the engine is operated either with one fuel or with the other fuel depending on the operating situation or environment. It is also known to concurrently inject the two different fuels into the combustion chamber of the cylinder.

Large engines that can be operated with two or more different fuels are referred to as dual-fuel or multi-fuel large engines. Depending on the fuels, these engines may be operated in a liquid mode, in which a liquid fuel is introduced into the cylinder for combustion, and/or in a gas mode, in which a gas is introduced into the cylinder as fuel.

Large engines, which can be operated with at least two or even more different liquid or gaseous fuels, are often operated in different operating modes depending on the fuel currently in use. In the operating mode often referred to as diesel operation, the combustion of the fuel generally takes place according to the principle of compression ignition or self-ignition of the fuel. In the mode often referred to as Otto operation, combustion takes place by induced ignition. This induced ignition can take place, for example, by an electrical spark (e.g., with a spark plug) or by the self-ignition of a small injected amount of fuel (pilot fuel), which then causes the induced ignition of another fuel. The small amount of fuel intended for self-ignition is directly inserted into the combustion chamber or injected into a pre-chamber connected to the combustion chamber. Forced ignition can thus be achieved by use of a pre-chamber, a spark plug, and/or a pilot fuel. The process of induced ignition by self-ignition of a small amount of a liquid or another self-igniting fuel is sometimes referred to as pilot injection.

Furthermore, mixed forms using both Otto and diesel operation are also known.

In particular, in view of attempts to reduce greenhouse gas emissions, the reduction of CO₂ production, and sustainability goals, a reduction in the use of fossil fuels is strived for. Thus, alternatives are investigated to at least reduce or even completely avoid the use of fossil fuels in large engines. Even if this is still a long way off, a partial replacement of fossil fuels by renewable fuels is considered a significant success.

One alternative to fossil fuel is, for example, methanol or ammonia. However, such renewable fuels can cause corrosion problems in the fuel distribution and injection system, in particular during standstill of the engine, when the stagnant methanol can corrosively attack the pipes or other components of the fuel injection system. Furthermore, there is the risk that these fuels escape from the engine, e.g., as vapor, into the space which is accessible to engine maintenance or operating personnel. This constitutes a health hazard requiring comprehensive mitigation measures.

The escaping of gaseous fuel into the atmosphere are usually referred to as fuel slip or fugitive emissions. When methanol or ammonia is used as a fuel in a large engine, most of the methanol or ammonia is consumed in the combustion process. However, some of the fuel remains unburned and may escape into the atmosphere, e.g., by passing through the exhaust gas system of the large engine (fuel slip). All upstream losses are summarized as fugitive emissions.. Methanol or ammonia is hazardous for the environment as well as for humans and animals. Therefore, great efforts are made to reduce the fuel slip occurring in large engines, such as those used for ship propulsion.

Use of fossil fuels and other alternative fuels in large engines contribute greatly to greenhouse gases and to the existing climate crisis. In attempts to reduce greenhouse gas emissions, reducing CO2 emissions in exhaust gases of power plants and industries or other sources in the environment are of utmost importance. Absorption of CO2 using a suitable solvent is one of the most prevalent and popular methods of carbon capture practised today. Physical or chemical (or a combination of both) solvents for absorption of CO2 can be adapted according to the requirements, where both the methods have advantages and disadvantages over the other. Chemical method of carbon capture is more widely practiced where the thermodynamic conditions do not favour a physical absorption process, wherein the chemical solvent has higher CO2 absorption and desorption potential.

On-board chemical absorption carbon capture requires CO2 desorption to regenerate the solvent in order to enable a cyclic, sustainable operation. This usually involves high energy demands. The process can be briefly described as follows: a suitable chemical solvent is introduced into an absorption unit, where it only reacts and dissolves CO2 from an exhaust gas, to form a temporary weak chemical structure while not reacting with any other gases. This (CO2) rich solvent can be regenerated by heating it to release the trapped CO2 molecule and thereby regenerating the (CO2) lean solvent that can then be used again for CO2 absorption.

Hence, the rich solvent from the absorption unit is then transferred to a desorption unit where it is stripped off the absorbed CO2 and the regenerated solvent is recycled and reused for the absorption process in the absorption unit. Although absorption of CO2 raises the temperature of this solvent, it needs to be further heated to a temperature of ~120-130°C. An external heating source or a reboiler is used to heat the solvent in the desorption unit. The regenerated (CO2 stripped) lean solvent is then recirculated and reused in the absorption unit. Whereas the desorbed CO2 is cooled and compressed to liquify and are stored in suitable containers.

The desorption unit may utilize the steam generated by exhaust gas to heat up the rich solvent. In large engines, the steam quality (temperatures and pressures) from the exhaust gas is not always optimum for raising the temperature of the solvent up to ~120-130 °C. While such temperatures might be achieved when the engine is working at its full load capacity, at partial engine loads, the waste heat is insufficient in quantity and/or quality to raise the temperature of the solvent to enable a sufficient CO2 desorption process. Thus, other, e.g. fuel intensive (combustion) form for generating required desorption heat is usually used.

On the other hand, the heat from the exhaust gas of the large engine is available in excess at some times and then cannot to be fully used for the CO2 desorption. As a result, excess heat is released unused into the atmosphere.

### Disclosure of the invention

On-board chemical absorption carbon capture is an energy intense yet very crucial process to curb CO2 concentration in the atmosphere. Presently known methods of on-board chemical absorption carbon capture from the exhaust gas of large engines involve a number of steps leading up to absorption and desorption of CO2 from a solvent. The known methods involve several challenges which will be addressed herein. It is an objective of the present invention to at least in part overcome the drawbacks of the prior art solutions and in particular to provide an apparatus, a system, a method, and a propulsion system for a marine vessel, which enable the capturing of a larger amount of CO2.

According to a first aspect of the invention, this objective is achieved by an apparatus configured for intermediate heat energy storage from a large engine, the apparatus comprising a container comprising a heat storage medium, wherein the heat storage medium is capable of reversibly absorbing, storing, and releasing heat energy from the large engine; means to transfer, at a first time, a first amount of heat energy from the large engine to the heat storage medium; and means to supply, at a second time, a second amount of heat energy from the heat storage medium for reuse, in particular in a carbon capture device.

The advantages of this apparatus include the ability to efficiently store excess heat energy generated by a large engine and reuse it in other processes, such as carbon capture. In other words, the heat energy can be stored between the first time (e.g. when the engine runs at full load) and the second time (e.g. when the engine runs on 30% load without enough waste heat). This can improve overall energy efficiency and enable a larger amount of CO2 to be captured, thus contributing to more sustainable and environmentally friendly operations.

According to an embodiment, the apparatus is configured to store at least 100MJ of heat energy, in particular at least 500 MJ of heat energy, particularly at least 1 GJ of heat energy.

These values correspond to an engine operation for 1h with the heat energy for CO2 desorption taken solely from the heat storage apparatus and not from the engine waste heat. The amount of energy stored will depend on the solvent that is used for the CO2 capturing (see below) and on the amount of time for which the supply of heat for OCC is foreseen. The solvent itself requires a specific amount of energy to desorb the CO2. As an example, for solvents that have low energy of regeneration, the required amount of energy will be around 30 GJ for operating the OCC system for 7 hours when the engine is at low loads, while for more energetically expensive solvents this amount can be as much as 60 GJ. These values correspond to supplying all of the energy from the thermal energy storage system and not taking any heat from the engine when the engine is running at lower loads, e.g. below 60 %. By taking advantage of both sources of heat (i.e. energy in the exhaust gas of the engine at low loads + thermal energy stored when the engine is at higher loads) the amount of heat need to be stored will be reduced.

According to an embodiment, the apparatus is configured to transfer the first amount of heat energy from at least one of the group consisting of an exhaust gas of the large engine, a cooling fluid such as cooling water of the large engine, and a lubrication fluid such as oil of the large engine. Further sources of heat can be foreseen as well. This has the advantage that waste heat from various sources can be used for thermal energy storage.

In particular, this makes it possible to utilize the waste heat from the engine's exhaust gas. This is significant because exhaust gases are typically a byproduct of engine operation and contain a substantial amount of thermal energy that can be repurposed.

According to an embodiment, the means to transfer the first amount of heat energy and/or the means to supply the second amount of heat energy comprises a heat exchanger.

The inclusion of a heat exchanger as the means to transfer and supply heat energy enhances the functionality of the apparatus by providing a more controlled and efficient method of heat transfer. This can lead to improved performance in terms of heat energy management, ensuring that the heat storage medium can absorb and release heat energy more effectively. Additionally, the use of a heat exchanger can contribute to the overall efficiency of the system, potentially reducing energy losses and improving the thermal management of the apparatus.

According to an embodiment, the apparatus is configured to supply the second amount of heat energy to a desorption container of a carbon capture device to provide the second amount of heat energy to a CO2 comprising solvent in the desorption container for desorbing a CO2 comprising fluid from the CO2 comprising solvent in an endothermic CO2 desorption process.

The supply of additional heat energy facilitates the desorption of a CO2 comprising fluid from the CO2 comprising solvent in an endothermic CO2 desorption process. This transfer of heat energy can be crucial for the desorption process, as it may provide the necessary energy to separate the CO2 from the solvent, in particular in times when not enough waste heat is available from the engine.

According to an embodiment, the heat storage medium comprises a latent heat storage material configured to undergo a phase-change such that the transfer of the first amount of heat energy and the supply of the second amount of heat energy enable a cyclic heat absorption and release from the heat storage medium.

This phase change mechanism can be of high importance as it enables the heat storage medium to absorb and release higher amounts of heat energy cyclically. In more detail, the absorption of the first amount of heat energy at the first time may lead to a phase change of the heat storage material, thereby storing the heat energy, while desorption of the second amount of heat energy at the second time may reverse the phase change of the heat storage material, wherein the stored heat energy is released such that a cyclic operation becomes possible. This cyclic process of heat absorption and release facilitated by the phase-change material enhances the efficiency and effectiveness of the heat storage medium.

The article "Latent thermal energy storage technologies and applications: A review" by Hussam Jouhara et al., 2020, available under https://doi.org/10.1016/j.ijft.2020.100039 gives details on this.

However, it is to be noted that the heat storage medium may also be a material that stores heat without undergoing a phase change.

According to an embodiment, the heat storage medium comprises one or more of a group consisting of water, salts, molten salts, benzamide, concrete, oil, and basalt.

These materials are selected for their ability to absorb, store, and release heat energy effectively, which is important for the apparatus's function of intermediate heat energy storage from a large engine. For example, water is known for its high specific heat capacity, making it an effective medium for absorbing and releasing heat. Molten salts, often used in thermal energy storage, have a high heat capacity and can operate at high temperatures, which is beneficial for storing large amounts of energy. Benzamide, a less common choice, offers thermal properties that can be advantageous under specific conditions. Concrete provides a solid, durable medium that can store heat over extended periods, while basalt, a volcanic rock, can also serve as a robust and stable heat storage medium.

According to an embodiment, the apparatus is configured to transfer the first amount of heat energy to the heat storage medium when the temperature of a CO2 comprising solvent in a desorption container of a carbon capture (OCC) device exceeds a first specified temperature threshold, e.g., 400 K; and/or supply the second amount of heat energy from the heat storage medium to the CO2 comprising solvent, when the temperature of the CO2 comprising solvent falls below a second specified temperature threshold, e.g. 400 K and/or transfer the first amount of heat energy to the heat storage medium at an engine load of above a first load threshold of, e.g. 50 % and/or supply the second amount of heat energy from the heat storage medium at an engine load of below a second load threshold of, e.g. 60 %.

This embodiment ensures that excess heat energy from the engine is efficiently stored when the solvent's temperature is high, preventing overheating and potential damage to the carbon capture device or the solvent. In addition, it ensures that the solvent is reheated when its temperature drops too low, maintaining the efficiency of the carbon capture process. Furthermore, the embodiment allows for optimal use of excess heat energy generated during high engine loads and ensures that the stored heat energy is utilized when the engine load is lower, thereby maintaining a balanced thermal management system and extending the operating condition ranges in which carbon capture is possible. This ensures that the apparatus operates efficiently under varying conditions, optimizing the performance of both the heat storage system and the carbon capture device.

According to an embodiment, the apparatus is connected to a heat pump configured to transfer a third amount of heat energy from a cooling process of a CO2 comprising fluid as desorbed from a CO2 comprising solvent in a desorption container of a carbon capture device to the heat storage medium.

This feature enhances the apparatus by integrating an additional source of heat energy that can be stored and subsequently reused. An improved mechanism for capturing and utilizing waste heat is provided, which would otherwise be lost during the cooling of the CO₂-comprising fluid. By transferring this third amount of heat energy to the heat storage medium, the apparatus not only improves its efficiency in storing heat energy but also contributes to the overall energy efficiency of the carbon capture process.

According to an embodiment, the storage temperature of the heat storage medium is between 340-500 K and in particular wherein the first amount of heat energy is transferred at a source temperature of above 400 K and/or wherein the second amount of heat energy is supplied at a target temperature of below 400 K. The term "source temperature" corresponds to a charging temperature of the heat storage medium, in which, e.g. an exhaust gas source temperature is above 400 K. The term "target temperature" corresponds to a release temperature of the heat storage medium, in which, e.g. a CO2 comprising solvent is heated to 340-370 K for CO2 evaporation from the solvent.

As another aspect of the invention, as an alternative or in addition to intermediately storing heat energy to bridge operating times of the large engine in which not enough waste heat is available, it is also possible to intermediately store a solvent which is capable of reversibly absorbing and desorbing CO2 from an exhaust gas of a large engine (11). Such an apparatus comprises a solvent storage container configured to, at a third time, receive a CO2 comprising solvent from an absorption container of a carbon capture (OCC) device. Then, later, at a fourth time, the CO2 comprising solvent is supplied from the solvent storage container to a desorption container of the carbon capture (OCC) device.

Accordingly, a related method for intermediately storing a solvent in a carbon capture (OCC) device, wherein the solvent is capable of reversibly absorbing and desorbing CO2 from an exhaust gas of a large engine, comprises steps of:
- at a third time, receiving a CO2 comprising solvent from an absorption container of the carbon capture (OCC) device in a solvent storage container;
- storing the solvent in the solvent storage container; and
- at a fourth time, supplying the CO2 comprising solvent (3) from the solvent storage container to a desorption container of the carbon capture (OCC) device.

This, again, as an alternative or in addition to intermediately storing heat energy from the engine, helps to bridge operating times of the large engine in which not enough waste heat is available. Thus, the carbon capture system (in particular, the desorption step thereof) can be operated under various operating conditions, in particular in times where there is not enough waste heat from the engine, which in turn leads to a higher amount of CO2 that can be captured. This improves the environmental impact.

A second aspect of the invention provides a system for separating CO2 from an exhaust gas of a large engine, in particular configured for use on board of a marine vessel, the system comprising an absorption container configured to receive the exhaust gas comprising CO2 from the large engine and a non-CO2 comprising solvent, wherein the non-CO2 comprising solvent absorbs at least a part of the CO2 from the exhaust gas, thereby producing CO2 comprising solvent and exhaust gas having a reduced CO2 content, a desorption container configured to receive the CO2 comprising solvent from the absorption container, wherein the desorption container is configured to evaporate a CO2 comprising fluid from the CO2 comprising solvent in the desorption container in an endothermic desorption process such that a non-CO2 comprising solvent is generated, wherein the absorption container is connected to the desorption container by a first line configured to transfer the CO2 comprising solvent from the absorption container to the desorption container, and an apparatus for intermediate heat storage according to any one of the embodiments described above. Furthermore, the apparatus for intermediate heat storage is configured to, on demand, e.g. in periods of low engine load without enough waste heat from the engine, supply a second amount of heat energy to the desorption container. As an alternative or in addition to the apparatus for intermediate heat storage, the system can comprise an apparatus for intermediate solvent storage as described above, which can also help to bridge periods of low engine load without enough waste heat from the engine.

The advantages of this system include the efficient removal of CO2 from exhaust gases, which is particularly beneficial for reducing emissions from large engines on marine vessels. The use of an intermediate heat storage apparatus enhances the energy efficiency of the desorption process, making the system more sustainable and potentially reducing operational costs.

According to an embodiment, the system further comprising a low-pressure source in a fluid connection with the desorption container, configured such that a low-pressure generated by the low-pressure source enhances the evaporation of the CO2 comprising fluid from the CO2 comprising solvent in the desorption container.

The presence of the low-pressure source is an enhancement to the system as it directly impacts the efficiency of the CO2 desorption process. By generating a low-pressure environment, the evaporation of the CO2 comprising fluid from the CO2 comprising solvent is enhanced. This is because reducing the pressure within the desorption container lowers the boiling point of the CO2 comprising fluid, thereby facilitating its evaporation at a lower temperature. This can lead to a more energy-efficient desorption process, as less heat energy may be required to achieve the desired level of CO2 evaporation. Furthermore, the enhancement of the evaporation process through the use of a low-pressure source may also contribute to a more rapid desorption process, potentially increasing the throughput of the system and allowing for more continuous or higher capacity operation.

A third aspect of the invention provides a method for storing heat energy from a large engine in an apparatus for intermediate heat energy storage according to any one of the above described embodiments, the method comprising steps of transferring, at a first time, a first amount of heat energy from the large engine to a heat storage medium of the apparatus, wherein the heat storage medium is capable of reversibly absorbing, storing, and releasing heat energy from the large engine; storing the heat storage medium in a container; and supplying, at a second time, a second amount of heat energy from the heat storage medium for reuse, in particular in an endothermic CO2 desorption process in a desorption container of a carbon capture device for desorbing a CO2 comprising fluid from a CO2 comprising solvent such that a non-CO2 comprising solvent is generated.

The advantages of this method include efficient utilization of waste heat from large engines, which would otherwise be lost. By storing and reusing this heat energy, the method enhances the overall energy efficiency and CO2 capturing capabilities of the system as the energetic bottleneck of CO2 desorption from the solvent can be bridged for periods in which not enough waste heat is available from the engine. Thus, the reuse of stored heat in the CO2 desorption process supports carbon capture efforts, contributing to environmental sustainability by reducing CO2 emissions.

According to an embodiment, the step of transferring the first amount of heat energy to the heat storage medium is carried out when the temperature of a CO2 comprising solvent in a desorption container of a carbon capture device exceeds a first specified temperature threshold; and/or the step of supplying the second amount of heat energy from the heat storage medium to the CO2 comprising solvent is carried out when the temperature of the CO2 comprising solvent falls below a second specified temperature threshold and/or the step of transferring the first amount of heat energy to the heat storage medium is carried out at an engine load of above, e.g. 50 % and/or the step of supplying the second amount of heat energy from the heat storage medium is carried out at an engine load of below, e.g. 60 %.

This implies a temperature-based control mechanism that ensures heat energy is transferred only when the solvent reaches a certain temperature, potentially optimizing the efficiency of the heat storage process by preventing unnecessary heat transfer when the solvent is already at a high temperature, e.g. in times of high engine loads with enough waste heat from the engine. Similarly, the embodiment specifies that the supply of the second amount of heat energy from the heat storage medium to the CO2 comprising solvent is carried out when the solvent's temperature falls below a second specified temperature threshold, e.g. in times of lower engine loads when there is not enough waste heat from the engine for efficient CO2 desorption. This introduces a complementary temperature-based control mechanism for the supply of heat energy, ensuring that heat is supplied only when the solvent's temperature is sufficiently low, which could be critical for maintaining the efficiency of the endothermic CO2 desorption process.

The embodiment also provides a load-based control mechanism that allows for the transfer of heat energy only when the engine is operating above a certain capacity, potentially optimizing the use of excess heat generated during high-load conditions. Conversely, the embodiment includes that the supply of the second amount of heat energy from the heat storage medium is carried out when the engine load is below 60 percent. This introduces a mechanism that prioritizes the supply of stored heat energy during lower engine load conditions, to supplement the reduced heat output from the engine itself. These features collectively enhance the method by introducing dynamic control mechanisms based on both temperature and engine load, which can optimize the storage and reuse of heat energy, improve the efficiency of the carbon capture process, and potentially reduce energy waste.

According to an embodiment, transferring the first amount of heat energy from the large engine to the heat storage medium comprises transferring heat energy from the exhaust gas of the large engine to the solvent and subsequently from the solvent to the heat storage medium. Thus, heat can be reused more efficiently.

According to an embodiment, the method comprises connecting a low-pressure source to the desorption container to enhance the CO2 desorption process.

A fourth aspect of the invention provides a propulsion system for a marine vessel comprising a large engine, in particular a longitudinally scavenged two-stroke engine with at least one cylinder having an inner diameter of at least 200 mm, and a system for separating CO2 from an exhaust gas of the large engine according to any one of the embodiments described above.

### Brief Description of the Drawings

The invention will be better understood and objects other than those set forth above will become apparent when consideration is given to the following detailed description thereof. Such description refers to the annexed drawings, wherein:
- FIG. 1: illustrates a system comprising a CO2 absorption container, a corresponding desorption container and an intermediate heat energy storage in accordance with an embodiment of the present invention;
- FIG. 2: illustrates an embodiment of a low-pressure source in accordance with a further embodiment of the present invention, to generate a low-pressure inside the desorption container; and
- FIG. 3: shows a schematic representation of an embodiment of a large engine.

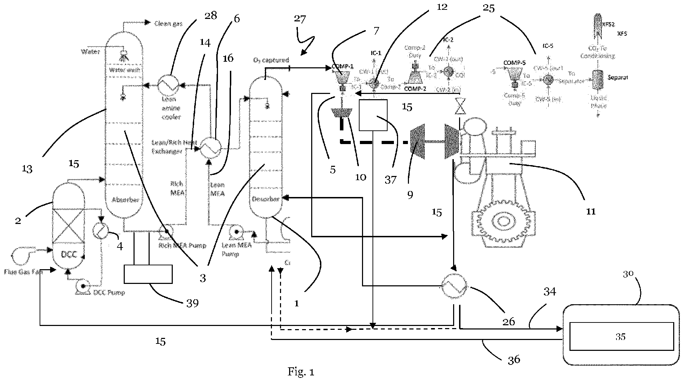

Figure 1 shows an on-board chemical absorption carbon capture system for use on board of a marine vessel according to an embodiment of the present invention.

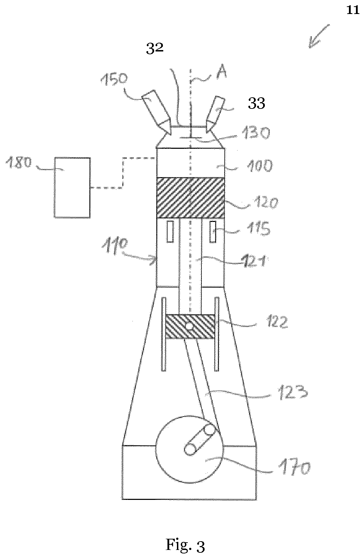

The system comprises an apparatus 27 configured for CO2 desorption from a solvent 3 supplied to a desorption container 1 of the apparatus 27. Preferably, the solvent 3 is capable of reversibly absorbing and desorbing CO2 from an exhaust gas 15 of a large engine 11 of the vessel. An example of the large engine 11 is shown in more detail in Fig. 3.

The system comprises a Direct Contact Cooler (DCC) unit 2 which is configured to receive filtered exhaust gas 15 from the large engine 11 through a heat exchanger 26 to reduce its temperature. The exhaust gas 15 includes CO2 and its temperature is further reduced to around 40°C by a cooler 4 of the DCC unit 2 to enhance absorption of CO2 from the exhaust gas by the solvent 3.

To carry out the absorption process the cooled exhaust gas 15 comprising CO2 is supplied from the DCC unit 2 to the absorption container 13 and a non-CO2 comprising or lean solvent 3 is also supplied to the absorption container 13 at an upper portion thereof after a cooling process in a cooler 28. In the absorption container 13 the non-CO2 comprising solvent 3 absorbs at least a part of the CO2 from the exhaust gas 15 in a countercurrent process, thereby producing CO2 comprising or rich solvent 3. This absorption process reduces the amount of CO2 in the exhaust gas 15. The absorption of CO2 by the lean solvent 3 is an exothermic reaction resulting in a temperature increase of the CO2 rich solvent. The purified and CO2 depleted exhaust gas 15 is exhausted from the absorption container 13 through an outlet provided at the top ("clean gas"). Before reaching the outlet, the exhaust gas 15 is further cleaned in a water wash effected by spraying water inside the absorption container 1 at a top portion thereof as is visible in Fig. 1. This is done in order to reduce the emissions of volatile compounds into the atmosphere.

The absorption container 13 is connected to the desorption container 1 by a first transfer line 14 configured to transfer the CO2 comprising solvent 3 to the desorption container 1.

The desorption container 1 is configured to receive the CO2 comprising solvent 3 and to evaporate a CO2 comprising fluid from the CO2 comprising solvent 3 in the container 1 in a desorption process such that non-CO2 comprising solvent 3 or lean solvent is generated.

The non-CO2 comprising solvent from the desorption container 1 is transferred back to the absorption container 13 via a second transfer line 16. The first and second transfer lines 14, 16 are connected to a common heat exchanger 6 so that lean solvent 3 from the desorption container 1 is cooled and rich solvent from the absorption container 13 is heated.

An intermediate heat energy storage includes a heat storage medium 35, contained within a container 30, which can undergo a phase-change to enable cyclic heat absorption and release. The heat storage medium 35 may comprise materials such as water or molten salts. A first amount 34 of heat energy is transferred at a first time from the large engine 11 to the heat storage medium 35, while a second amount 36 of heat energy is supplied later, at a second time, from the heat storage medium 35 for reuse in the desorption container 1 of the apparatus 27 configured for CO2 desorption.

By intermediately storing heat energy from the first time (with high engine load with plenty of waste heat) to the second time (with low engine load with insufficient waste heat for CO2 desorption), the carbon capture device can be run at longer time intervals and more CO2 can be captured. This improves the environmental impact.

The intermediate heat energy storage can be configured so that the first amount 34 of heat energy is transferred to the heat storage medium 35 when the temperature of the CO2 comprising solvent 3 in the desorption container 1 exceeds a first specified temperature threshold. Conversely, the second amount 36 of heat energy can be supplied from the heat storage medium 35 to the CO2 comprising solvent 3 when the temperature of the CO2 comprising solvent 3 in the desorption container 1 falls below a second specified temperature threshold.

The transfer of heat energy can also be regulated based on the engine load of the large engine 11, with the first amount 34 of heat energy being transferred to the heat storage medium 35 at an engine load of above 50% and the second amount 36 of heat energy being supplied from the heat storage medium 35 to the CO2 comprising solvent 3 at an engine load of below 60%. Other engine loads may also be applicable.

Furthermore, heat energy being can also be transferred from the CO2 comprising solvent 3 in the desorption container 1 to the heat storage medium 35. This transfer of heat energy can be done, for example, in situations where the temperature of the solvent 3 exceeds a specified temperature threshold to avoid a deterioration of the solvent due to excessive temperature.

As an alternative or in addition to intermediately storing heat energy, also CO2 comprising solvent 3 can be temporarily stored in a solvent storage container 39 connected to the first transfer line 14 which can also help to bridge operation periods of the large engine without enough waste heat for efficient CO2 desorption.

A low-pressure source 5 in a fluid connection with the desorption container 1 is configured such that the low-pressure generated by the low-pressure source 5 enhances the evaporation of the CO2 comprising fluid from the rich solvent 3 in the desorption container 1.

In the embodiment shown in figure 1, the low-pressure source 5 comprises a compressor 7 that is connected to the desorption container 1 in such a way that the low-pressure is generated in the desorption container 1. The compressor 7 may be connected to desorption container 1 by a pipe that is mounted to a top part of the desorption container 1. Various means can be used to drive the compressor 7.

According to the given embodiment shown in Fig. 1, the compressor 7 is driven by exhaust gas 15 of the large engine 11, wherein at least a part of the exhaust gas 15 is directed through an auxiliary turbine 10 connected to the compressor 7 and thereby drives the compressor 7. After passing through the auxiliary turbine 10 the exhaust gas 15 is recombined with the mainstream of exhaust gas 15 from the large engine 11 and subsequently directed through the heat exchanger 26.

According to an alternative, as shown in figure 1 by the dashed line, a main turbocharger 9 of the large engine 11 that is also used for charging the large engine 11 is, for example, mechanically connected to the compressor 7 and the compressor 7 is driven by the main turbocharger 9.

Figure 1 shows a cooler 12 connected to the desorption container 1 downstream the compressor 7 which is configured to cool the evaporated CO2 comprising fluid and configured to condense and separate evaporated water and solvent 3 remains included in the evaporated CO2 comprising fluid. The separated CO2 is then further processed, purified and compressed to liquify and store in one or more appropriate containers. For this purpose, additional compressor and cooling stages 25 are provided downstream the cooler 12. The solvent 3 is reintroduced into the desorption container 1 after the removal of CO2.

Figure 1 also shows the integration of a heat pump 37 configured to transfer a third amount of heat energy to the heat storage medium 35 resulting from the cooling process in the cooler 12 of the CO2 comprising fluid as desorbed from the CO2 comprising solvent 3 in the desorption container 1. Additional heat pumps can also be used in the additional compressor and cooling stages 25 to supply additional heat energy to the heat storage medium 35.

To enhance the desorption process of the CO2 comprising fluid from the desorption container 1, the heat recovered from the exhaust gas 15 by the heat exchanger 26 is used for heating the desorption container 1. However, the amount of heat provided to the desorption container 1 depends on the temperature of the exhaust gas 15 of the large engine 11. The temperature of the exhaust gas 15 can, e.g. only be sufficient to heat the rich solvent 3 in the desorption container 1 to a temperature of 120-130°C in the desorption container 1 that is sufficient for the evaporation of a significant amount of CO2 comprising fluid if the large engine runs at its full load capacity. In contrast, the evaporation of the CO2 comprising fluid will not be sufficient to desorb a significant amount of CO2 in situations where the large engine 11 runs at low loads, e.g. at 50% load or less. According to the present invention, the evaporation rate of the CO2 comprising fluid is enhanced by generating low pressure with the low-pressure source 5 connected to the desorption container 1. Preferably, the evaporation rate of the CO2 comprising fluid at lower solvent temperatures in the range of 70-100°C is thus enhanced, e.g. to an amount comparable to evaporation conditions when the large engine 11 is running at its full capacity.

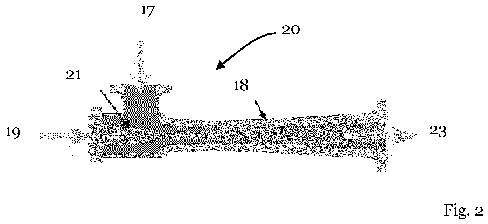

Figure 2 illustrates an alternative low-pressure source 5. This low-pressure source may replace or supplement the compressor 7 shown in Fig. 1 and can be connected to the desorption container to generate a low-pressure inside the desorption container 1. This low-pressure source 5 comprises a valve 20 having a first inlet 17 for the evaporated CO2 comprising fluid from the desorption container 1 and a second inlet 19 for a second fluid. The first inlet 17 of the valve 20 at least partially encircles the second inlet 19. Furthermore, the outlet 23 comprises a diffuser 18. The second inlet 19 comprises a nozzle 21 which accelerates the second fluid. The outlet 23 of the valve 20 combines the evaporated CO2 comprising fluid and the accelerated second fluid such that in combination with the diffuser 23 a low-pressure is generated in the evaporated CO2 comprising fluid the desorption container 1 so that the amount of evaporated CO2 comprising fluid is increased even at lower temperatures in the range of 70-100°C of the solvent in the desorption container 1 instead of 120-130°C of the solvent 3 which can be achieved under conditions of the large engine 11 running at its full capacity.

Fig. 3 shows a schematic representation of an embodiment of a large engine 11 in cross-section. In Fig. 3, only one of the cylinders 110 of the large engine 11 is shown. Usually, the large engine 11 comprises a plurality of cylinders 110, for example at least four and up to twelve cylinders 110 or even more. The term "large engine" refers to internal combustion engines that are typically used as drive units for ships or in stationary operations, such as driving large generators for generating electrical energy. Typically, the cylinders 110 of a large engine 11 each have an inner diameter (bore) of at least about 200 mm. Large engines 11 are known in various configurations, for example as two-stroke engines or four-stroke engines.

In the following description, reference is made by way of example to a large engine 11 configured as a longitudinally scavenged two-stroke large engine having a plurality of cylinders 110. Each cylinder 110 has a combustion chamber 100. Furthermore, in each cylinder 110, a piston 120 is arranged for reciprocating movement between a top dead center and a bottom dead center.

The term "longitudinally scavenged" means that the scavenging or charging air is introduced into the cylinder 110 in the area of the lower end, and an exhaust valve 130 is arranged in or at the cylinder cover 32 located at the upper end of the cylinder 110.

In particular, reference is made to a large longitudinally scavenged two-stroke engine that can be operated with different fuels, namely with a first fuel and with a second fuel. Preferably, the large engine 11 is configured as a large diesel engine. The term "large diesel engine" refers to engines that can be operated at least in diesel operation. In particular, the term "large diesel engine" also comprises large engines 11 that can be operated in another mode, e.g., Otto operation, in addition to diesel operation.

According to a preferred configuration, the large engine 11 can be operated with methanol or ammonia as a first fuel and with a self-igniting and liquid second fuel. For this, the large engine 11 comprises a first fuel supply system and a second fuel supply system. Usually, liquid fuel, such as heavy fuel oil (HFO), marine diesel oil (MDO), or marine gas oil (MGO), is injected directly into the combustion chamber 100 at a suitable time and ignites there according to the diesel principle of self-ignition. For injecting the second fuel into the combustion chamber 100, each cylinder comprises a second fuel injector 150, which is different from the first fuel injector 33. Thus, each cylinder 110 comprises at least one, but preferably a plurality of, first fuel injectors 33 for injecting the first fuel, as well as at least one, but preferably a plurality of, second fuel injectors 150 for injecting the second fuel.

The first fuel, which is injected with the fuel injector 33 into the combustion chamber 100, is, for example, a fuel for Otto operation, i.e., with induced ignition of the fuel. The first fuel can be injected into the combustion chamber 100 where it is ignited according to the Otto principle. This induced ignition is usually caused by introducing a small amount of self-igniting second fuel (e.g., diesel or heavy fuel oil) into the combustion chamber 100 or into a pre-chamber at a suitable moment, which second fuel then ignites itself and causes the induced ignition of the first fuel in the combustion chamber 100.

Introducing a small amount of a self-igniting liquid second fuel into the combustion chamber 100 or into at least one pre-chamber for the induced ignition of the first fuel is also referred to as pilot ignition. Beside a diesel oil it is also possible to use a gas or an alcohol such as methanol as pilot fluid for the pilot ignition.

In other embodiments, the induced ignition is achieved by way of spark ignition, laser pulse, or any other means suited for igniting the fuel in the combustion chamber 100.

In the following description, reference is made to a preferred embodiment in which the first fuel is methanol or ammonia, and the second fuel is a diesel fuel for self-ignition, for example HFO, MDO, or MGO. Regarding the first fuel, it is preferred that the operation with the first fuel is an operation according to the Otto principle.

Furthermore, the large diesel engine 11 can be operated in a mixed mode, in which both the first fuel and the second fuel are injected into the combustion chamber 100 of the cylinder 110. In the mixed mode, both the combustion of the first fuel and the combustion of the second fuel contribute to the generation of torque.

In the embodiment described here, the large engine is configured as a longitudinally scavenged dual-fuel two-stroke large diesel engine, which can be operated with methanol or ammonia as the first fuel and/or with a diesel fuel as the second fuel.

The dual-fuel large diesel engine has a plurality of cylinders 110. In each cylinder 110, the piston 120 is connected in a manner known per se to a crosshead 122 via a piston rod 121. The crosshead 122 is connected to a crankshaft 170 via a push rod or connecting rod 123, so that the movement of the piston 120 is transmitted via the piston rod 121, the crosshead 122, and the connecting rod 123 to the crankshaft 170 to rotate it. The upper side of the piston 120, together with the cylinder cover 2, delimits the combustion chamber 100 into which the first fuel and/or the second fuel is introduced.

The structure and individual components of a large diesel engine 11, such as the injection system for the fuels, the gas exchange system, the exhaust system, the turbocharger system for the supply of scavenging or charging air, as well as the monitoring and control system, are sufficiently known to those skilled in the art for both two-stroke and four-stroke engine designs and therefore need no further explanation here.

In the embodiment of a longitudinally scavenged two-stroke large diesel engine 11, scavenging air slots 115 are usually provided in the lower region of each cylinder 110 or cylinder liner. These slots are periodically closed and opened by the movement of the piston 120 in the cylinder 110, allowing the scavenging air provided by the main turbocharger 9 under charging pressure to flow into the cylinder 110 through the scavenging air slots 115 when they are open. In the cylinder cover 32, the usually centrally arranged exhaust valve 130 is provided, through which the exhaust gases can be discharged from the cylinder 110 into the exhaust system after the combustion process. The exhaust system guides at least a part of the exhaust gases to a turbine of the main turbocharger 9, whose compressor provides the scavenging air, also referred to as charging air, in a scavenge air receiver under scavenge air pressure. The scavenge air receiver is in fluid communication with the scavenging air slots 115 of the cylinders 110.

Each cylinder 110 comprises at least one first fuel injector 33 for injecting the first fuel into the combustion chamber 100 of the cylinder 110. Preferably, the cylinder 110 comprises a plurality of first fuel injectors 33, for example two or three first fuel injectors 33, for uniformly distributing the first fuel in the combustion chamber 100. In the embodiment of the large engine 11 described here, exactly three first fuel injectors 33 are provided (only one first fuel injector 33 is shown in the schematic representation of Fig. 3). Each first fuel injector 33 is arranged in the cylinder cover 32 of the cylinder 110. The cylinder cover 32 comprises an inner surface for delimiting the combustion chamber 100 and an injector bore extending through the cylinder cover 32 and opening into the inner surface. The injector bore is configured to receive the first fuel injector 33. Preferably, the first fuel injectors 33 are arranged in the cylinder cover 32 near the exhaust valve 130.

Each cylinder 110 further comprises at least one second fuel injector 150 for injecting the second fuel into the combustion chamber 100 of the cylinder 110. Preferably, the cylinder 110 comprises a plurality of second fuel injectors 150, for example two or three second fuel injectors 150, for uniformly distributing the second fuel in the combustion chamber 100. In the embodiment of the large engine 200 described here, exactly three second fuel injectors 150 are provided (only one second fuel injector 150 is shown in the schematic representation of Fig. 3). Each second fuel injector 150 is arranged in the cylinder cover 32 of the cylinder 110 in a manner known in the art. Preferably, the second fuel injectors 150 are arranged in the cylinder cover 32 near the exhaust valve 130.

Nowadays, a large diesel engine or a large engine 11 in general is operated in a fully electronically controlled manner. An engine control unit 180 operates and controls all functions of the large engine 11-for example, the operation of the exhaust valves 130 for the gas exchange, the injection process for the fuels, and the pilot injection timing (when pilot injection is required)-by way of electric or electronic signals and commands. In addition, the engine control unit 180 receives information from several detectors, sensors, or measuring devices.

It is noted that the invention is not restricted to this specific type of a longitudinally scavenged two-stroke large engine 11, which can be operated with the first fuel and/or with the second fuel. The large engine can also be any other type of large engine. In particular, it is possible that the large engine is configured for the combustion of only one fuel.

Any embodiments described with respect to the devices shall similarly pertain to the method. Synergetic effects may arise from different combinations of the embodiments although they might not be described in detail. While there are shown and described presently preferred embodiments of the invention, it is to be distinctly understood that the invention is not limited thereto but may be otherwise variously embodied and practiced within the scope of the following claims.

### Reference numerals:

1- desorption container
2- Direct Contact Cooler (DCC) unit
3- solvent
4- cooler of the DCC unit
5- low-pressure source
6- heat exchanger
7- compressor
9- main turbocharger
10- auxiliary turbocharger
11- large engine
12- cooler
13- absorption container
14- first line
15- exhaust gas
16- second line
17- first inlet
18- diffuser
19- second inlet
20-valve
21- nozzle
23- outlet
25- compressor and cooling stages
26- heat exchanger
27- desorption apparatus
30- storage container
32- cylinder cover
33- first fuel injector
34-first amount of heat energy
35- heat storage medium
36- second amount of heat energy
37- heat pump
39- solvent storage container
100- combustion chamber
110- cylinder
115- scavenging air slots
120- piston
121- piston rod
122- crosshead
123- connecting rod
130- exhaust valve
150- second fuel injector
170- crankshaft
180- engine control unit

## Claims

1. An apparatus configured for intermediate heat energy storage from a large engine (11), the apparatus comprising:
- a container (30) comprising a heat storage medium (35), wherein the heat storage medium (35) is capable of reversibly absorbing, storing, and releasing heat energy from the large engine (11);
- means to transfer, at a first time, a first amount (32) of heat energy from the large engine (11) to the heat storage medium (35); and
- means to supply, at a second time, a second amount (34) of heat energy from the heat storage medium (35) for reuse, in particular in a carbon capture (OCC) device.

2. The apparatus according to claim 1 configured to store at least 100 MJ, of heat energy, in particular at least 500 MJ of heat energy, particularly at least 1 GJ of heat energy.

3. The apparatus according to any one of the preceding claims, configured to transfer the first amount (32) of heat energy from at least one of the group consisting of an exhaust gas (15) of the large engine (11), a cooling fluid of the large engine (11), and a lubrication fluid of the large engine (11).

4. The apparatus according to any one of the preceding claims, configured to supply the second amount (34) of heat energy to a desorption container (1) of a carbon capture (OCC) device to provide the second amount (34) of heat energy to a CO2 comprising solvent (3) in the desorption container (1) for desorbing a CO2 comprising fluid from the CO2 comprising solvent (3) in an endothermic CO2 desorption process.

5. The apparatus according to any one of the preceding claims, wherein the heat storage medium (35) comprises a latent heat storage material configured to undergo a phase-change such that the transfer of the first amount (32) of heat energy and the supply of the second amount (34) of heat energy enable a cyclic heat absorption and release from the heat storage medium (35).

6. The apparatus according to any one of the preceding claims, wherein the heat storage medium (35) comprises one or more of a group consisting of water, salt, molten salt, benzamide, concrete, oil, and basalt.

7. The apparatus according to any one of the preceding claims, configured to:
- transfer the first amount (32) of heat energy to the heat storage medium (35), when the temperature of a CO2 comprising solvent in a desorption container (1) of a carbon capture (OCC) device exceeds a first specified temperature threshold; and/or
- supply the second amount (34) of heat energy from the heat storage medium (35) to the CO2 comprising solvent, when the temperature of the CO2 comprising solvent falls below a second specified temperature threshold and/or
- transfer the first amount (32) of heat energy to the heat storage medium (35) at an engine load of above 50 % and/or
- supply the second amount (34) of heat energy from the heat storage medium (35) at an engine load of below 60 %.

8. The apparatus according to any one of the preceding claims, wherein the apparatus is connected to a heat pump configured to transfer a third amount (32) of heat energy from a cooling process of a CO2 comprising fluid as desorbed from a CO2 comprising solvent (3) in a desorption container (1) of a carbon capture (OCC) device to the heat storage medium (35).

9. The apparatus according to any one of the preceding claims, wherein a storage temperature of the heat storage medium (35) is between 340-500 K,
and in particular wherein the first amount (32) of heat energy is transferred at a source temperature of above 400 K and/or
wherein the second amount (34) of heat energy is supplied at a target temperature of below 400 K.

10. An apparatus, in particular according to any one of the preceding claims, for intermediate storage of a solvent (3), wherein the solvent (3) is capable of reversibly absorbing and desorbing CO2 from an exhaust gas of a large engine (11), the apparatus comprising a solvent storage container (39) configured to
- at a third time, receive a CO2 comprising solvent (3) from an absorption container (13) of a carbon capture (OCC) device; and
- at a fourth time, supply the CO2 comprising solvent (3) from the solvent storage container (39) to a desorption container (1) of the carbon capture (OCC) device.

11. A system for separating CO2 from an exhaust gas (15) of a large engine (11), in particular configured for use on board of a marine vessel, the system comprising:
- an absorption container (13) configured to receive the exhaust gas (15) comprising CO2 from the large engine (11) and a non-CO2 comprising solvent (3), wherein the non-CO2 comprising solvent (3) absorbs at least a part of the CO2 from the exhaust gas (15), thereby producing CO2 comprising solvent (3) and exhaust gas (15) having a reduced CO2 content,
- a desorption container (1) configured to receive the CO2 comprising solvent (3) from the absorption container (13), wherein the desorption container (1) is configured to evaporate a CO2 comprising fluid from the CO2 comprising solvent (3) in the desorption container (1) in an endothermic desorption process such that a non-CO2 comprising solvent (3) is generated,
wherein the absorption container (13) is connected to the desorption container (1) by a first line (14) configured to transfer the CO2 comprising solvent (3) from the absorption container (13) to the desorption container (1), and
- an apparatus for intermediate heat storage according to any one of the claims 1 to 9, wherein the apparatus for intermediate heat storage is configured to, on demand, supply a second amount (34) of heat energy to the desorption container (1), and/or
- an apparatus for intermediate solvent (3) storage according to claim 10.

12. The system according to claim 11, further comprising a low-pressure source (5) in a fluid connection with the desorption container (1), configured such that a low-pressure generated by the low-pressure source (5) enhances the evaporation of the CO2 comprising fluid from the CO2 comprising solvent (3) in the desorption container (1).

13. A method for storing heat energy from a large engine (11) in an apparatus for intermediate heat energy storage according to any one of the claims 1 to 9, the method comprising steps of:
- transferring, at a first time, a first amount (34) of heat energy from the large engine (11) to a heat storage medium (35) of the apparatus, wherein the heat storage medium is capable of reversibly absorbing, storing, and releasing heat energy from the large engine (11);
- storing the heat storage medium (35) in a container (30); and
- supplying, at a second time, a second amount (36) of heat energy from the heat storage medium (35) for reuse, in particular in an endothermic CO2 desorption process in a desorption container (1) of a carbon capture (OCC) device for desorbing a CO2 comprising fluid from a CO2 comprising solvent (3) such that a non-CO2 comprising solvent (3) is generated.

14. The method according to claim 13,
wherein the step of transferring the first amount (34) of heat energy to the heat storage medium (35) is carried out when the temperature of a CO2 comprising solvent in a desorption container (1) of a carbon capture (OCC) device exceeds a first specified temperature threshold; and/or
wherein the step of supplying the second amount (36) of heat energy from the heat storage medium (35) to the CO2 comprising solvent is carried out when the temperature of the CO2 comprising solvent falls below a second specified temperature threshold and/or
wherein the step of transferring the first amount (34) of heat energy to the heat storage medium (35) is carried out at an engine load of above 50 % and/or wherein the step of supplying the second amount (36) of heat energy from the heat storage medium (35) is carried out at an engine load of below 60 %.

15. The method according to any one of the claims 13 to 14, wherein transferring the first amount (34) of heat energy from the large engine (11) to the heat storage medium (35) comprises transferring heat energy from the large engine (11) to the solvent (3) and subsequently from the solvent (3) to the heat storage medium (35).

16. A method for storing a solvent (3) in a carbon capture (OCC) device, wherein the solvent (3) is capable of reversibly absorbing and desorbing CO2 from an exhaust gas of a large engine (11), the method comprising steps of:
- at a third time, receiving a CO2 comprising solvent (3) from an absorption container (13) of the carbon capture (OCC) device in a solvent storage container (39);
- storing the solvent (3) in the solvent storage container (39); and
- at a fourth time, supplying the CO2 comprising solvent (3) from the solvent storage container (39) to a desorption container (1) of the carbon capture (OCC) device.

17. A propulsion system for a marine vessel comprising
- a large engine (11), in particular a longitudinally scavenged two-stroke engine with at least one cylinder having an inner diameter of at least 200 mm, and
- a system for separating CO2 from an exhaust gas (15) of the large engine (11) according to any one of the claims 11 or 12.
